# EUROPEAN PATENT APPLICATION

(11) **EP 4 120 429 A1**
(43) Date of publication of application: **18.01.2023**
(21) Application number: 21842712.8
(22) Date of filing: 21.06.2021
(51) Int. Cl.: H01M 10/44, H01M 10/48, H02J 7/00, H02J 7/02

(54) **USED BATTERY UNIT HOLDER, AND USED BATTERY UNIT STORAGE SYSTEM**

(30) Priority: 13.07.2020 JP 2020120070
(71) Applicant: Toyo System Co., Ltd., Iwaki-shi, Fukushima 972-8316 (JP)
(72) Inventor: EBISAWA Noboru, Iwaki-shi, Fukushima 972-8316 (JP); TOMIZAWA Yutaka, Iwaki-shi, Fukushima 972-8316 (JP); SHOJI Hideki, Iwaki-shi, Fukushima 972-8316 (JP)
(74) Representative: Schön, Christoph
(86) International application number: PCT/JP2021/023344
(87) International publication number: WO 2022/014263

(57) **Abstract**

Provided are a used battery unit holder and a used battery unit storage system capable of easily storing and transporting used battery units from various manufacturers while suppressing the deterioration of the used battery units during storage. The used battery unit holder is detachably attachable to a storage device for storing multiple used battery units, including: a connection unit for connecting a used battery unit held in the holder through a circuit included in the storage device in such a manner that the used battery unit can be charged and discharged; a battery status recognition unit which recognizes the battery status of the used battery unit; a charge/discharge instruction acquisition unit which acquires charge/discharge instruction information; and a charge/discharge management unit which discharges from a discharge-target battery unit and charges a charge-target battery unit in a manner to fall within a predetermined SOC range according to the charge/discharge instruction information.

## Description

### Technical Field

The present invention relates to a used battery unit holder detachably attachable to a storage device for storing used battery units, and a used battery unit storage system.

### Background Art

Conventionally, a battery storing method has been proposed (see Patent Literature 1).

### Citation List

### Patent Literature

Patent Literature 1: Japanese Patent Application Laid-Open No. 2000-113909

### Summary of Invention

### Technical Problem

According to the technique disclosed in Patent Literature 1, batteries during storage can be repeatedly charged and discharged to suppress the deterioration of the batteries during storage.

Incidentally, to do reuse business of used battery units, a certain number of used battery units are collected and stored. Since used battery units are large in size and different in shape and size from manufacturer to manufacturer, it is troublesome to store and transport the used battery units.

In the technique disclosed in Patent Literature 1, it is not considered to store and transport used battery units easily.

Then, used battery units need to be stored to prevent the used battery units from deteriorating during storage, and in order to do this, SOCs (States Of Charge) of the used battery units need to be managed properly.

Then, the used battery units need to be charged or discharged to fall within a predetermined SOC range according to the respective characteristics of the used battery units in order to manage the SOCs of the used battery units properly.

In each used battery unit, BMU (Battery Management Unit), CCU (Cell Control Unit), and the like for each manufacturer are set up as a mechanism for recognizing the SOC of the battery unit, but these BMU and CCU interfaces are usually undisclosed.

Therefore, in view of such conventional problems, it is an object of the present invention to provide a used battery unit holder and a used battery unit storage system capable of storing and transporting used battery units easily while suppressing the deterioration of used battery units from various manufacturers.

### Solution to Problem

The used battery unit holder of the present invention is a used battery unit holder detachably attachable to a storage device which stores a plurality of used battery units, including:
a holder body which holds each of the used battery units;
a connection unit connected to the used battery unit held in the holder to connect the used battery unit held in the holder through a connection circuit included in the storage device in such a manner that the used battery unit can be charged and discharged;
a battery status recognition unit connected to the used battery unit held in the holder to recognize battery status including the current value and the voltage value of the used battery unit;
a charge/discharge instruction acquisition unit which acquires charge/discharge instruction information based on the battery status recognized by the battery status recognition unit to give a discharge instruction to a discharge-target battery unit to be discharged and give a charge instruction to a charge-target battery unit to be charged among the used battery units; and
a charge/discharge management unit which discharges from the discharge-target battery unit and charges the charge-target battery unit according to the charge/discharge instruction information acquired by the charge/discharge instruction acquisition unit so that SOCs (States Of Charge) of the discharge-target battery unit and the charge-target battery unit fall within a predetermined SOC range.

According to the used battery unit holder of the present invention, since the used battery unit is stored in the storage device in such a state that the used battery unit is held in the holder, it is easy to handle the used battery unit compared with a case where various used battery units different in shape and size are stored and transported as they are.

Further, since the holder is detachably attachable to the storage device, it is convenient because the holder can be transported while being connected with the used battery unit during transportation.

Thus, used battery units from various manufacturers can be stored and transported easily.

Then, since the battery status recognition unit recognizes the battery status including the current value and voltage value of the used battery unit instead of BMU and CCU preset in the used battery unit, the current value, the voltage value, and the like of the used battery unit can be recognized even when the preset BMU and CCU interfaces are undisclosed.

Then, since the used battery unit is connected through the connection circuit included in the storage device in such a manner that the used battery unit can be charged and discharged, and the charge/discharge management unit discharges from the discharge-target battery unit and charges the charge-target battery unit according to the charge/discharge instruction information acquired by the charge/discharge instruction acquisition unit so that the SOCs of the discharge-target battery unit and the charge-target battery unit fall within the predetermined SOC range, the deterioration of the used battery units during storage can be suppressed reliably.

Thus, the deterioration of used battery units from various manufacturers during storage can be suppressed.

Thus, according to the used battery unit holder of the present invention, used battery units from various manufacturers can be stored and transported easily while suppressing the deterioration of the used battery units during storage.

It is preferred that, in the used battery unit holder of the present invention,
the connection unit is configured to connect the used battery unit held in the holder to be able to be mutually charged/discharged through the connection circuit included in the storage device,
the charge/discharge instruction acquisition unit is configured to acquire charge/discharge instruction information to give charge/discharge instructions between the discharge-target battery unit and the charge-target battery unit based on the battery status recognized by the battery status recognition unit, and
the charge/discharge management unit is configured to discharge from the discharge-target battery unit and charge the discharged power to the charge-target battery unit according to the charge/discharge instruction information acquired by the charge/discharge instruction acquisition unit in such a manner that the SOCs of the discharge-target battery unit and the charge-target battery unit fall within the predetermined SOC range.

When charging or discharging to fall within the predetermined SOC range according to the characteristics of each used battery unit, it is not economical to waste power at the time of discharge or to pay an electricity bill at the time of charge.

According to the used battery unit holder of the present invention, each used battery unit is connected by the connection unit with other used battery units through the connection circuit included in the storage device to be able to be mutually charged/discharged. Further, since the charge/discharge management unit charges the discharged power from the discharge-target battery unit to the charge-target battery unit in such a manner that the SOCs of the discharge-target battery unit and the charge-target battery unit fall within the predetermined SOC range according to the charge/discharge instruction information acquired by the charge/discharge instruction acquisition unit, power used to charge each of the used battery units stored in the storage device is covered by power discharged from any other used battery unit, and this is economical.

Thus, used battery units from various manufacturers can be stored economically while suppressing the deterioration of the used battery units during storage.

Thus, according to the used battery unit holder of the present invention, used battery units from various manufacturers can be stored and transported easily and economically while suppressing the deterioration of the used battery units during storage.

It is also preferred that, in the used battery unit holder of the present invention,
the battery status recognition unit is configured to recognize the temperature of the used battery unit held in the holder as the battery status, and
the charge/discharge instruction acquisition unit is configured to acquire the charge/discharge instruction information based on the battery status including the temperature of the used battery unit.

The current and voltage characteristics of each used battery unit change according to the temperature of the used battery unit. In order to charge or discharge each used battery unit to fall within the predetermined SOC range according to the characteristics of the used battery unit, it is also important to manage the temperature of the battery.

According to the used battery unit holder of the present invention, the battery status recognition unit recognizes the temperature of each used battery unit, and the charge/discharge management unit charges or discharges the used battery unit held in the holder according to charge/discharge instruction information based on the recognition results including the recognized temperature of the used battery unit.

Thus, charge/discharge control can be performed effectively while considering the temperature of the used battery unit.

Thus, according to the used battery unit holder of the present invention, used battery units from various manufacturers can be stored and transported easily while effectively suppressing the deterioration of the used battery units during storage.

It is further preferred that, in the used battery unit holder of the present invention,
the battery status recognition unit is configured to recognize the battery status of each of a plurality of cells that construct the used battery unit,
the charge/discharge instruction acquisition unit is configured to acquire the charge/discharge instruction information based on the battery status of each of the plurality of cells, and
the charge/discharge management unit is configured to charge or discharge each of the plurality of cells that construct the used battery unit held in the holder according to the charge/discharge instruction information acquired by the charge/discharge instruction acquisition unit until a voltage value difference among the plurality of cells becomes less than a predetermined tolerance.

In the used battery unit composed of the plurality of cells, voltage values among the cells vary in the process used.

Then, when such a used battery unit that voltage values among the cells vary is charged or discharged, some of the cells may be over-discharged or overcharged in the used battery unit, and the deterioration of the used battery unit on a cell-by-cell basis during storage may not be suppressed.

According to the used battery unit holder of the present invention, the battery status recognition unit recognizes the battery status of each of the plurality of cells that construct the used battery unit, and the charge/discharge management unit charges or discharges each of the plurality of cells according to the charge/discharge instruction information based on the battery status of each of the plurality of cells until the voltage value difference among the plurality of cells becomes less than the predetermined tolerance.

Thus, since variations in cell voltage are eliminated and hence charging or discharging is done to suppress the over-discharge or overcharge on a cell-by-cell basis, the deterioration of the used battery unit during storage can be suppressed on a cell-by-cell basis.

Thus, according to the used battery unit holder of the present invention, used battery units from various manufacturers can be stored and transported easily while suppressing the used battery units during storage on a cell-by-cell basis.

A used battery unit storage system of the present invention includes:
a holder which detachably holds a used battery unit;
a storage device of used battery units, to which a plurality of holders in which the used battery units are held, respectively, can be detachably attached;
a connection unit provided in the holder to be connectable to the used battery unit held in the holder;
a battery status recognition unit connected to the used battery unit held in the holder through the connection unit to recognize battery status including the current value and voltage value of the used battery unit;
a charge/discharge instruction acquisition unit which acquires charge/discharge instruction information to give a discharge instruction to a discharge-target battery unit to be discharged and a charge instruction to a charge-target battery unit to be charged among the plurality of used battery units based on the battery status recognized by the battery status recognition unit; and
a charge/discharge management unit which discharges from the discharge-target battery unit and charges the charge-target battery unit according to the charge/discharge instruction information acquired by the charge/discharge instruction acquisition unit so that SOCs (States Of Charge) of the discharge-target battery unit and the charge-target battery unit fall within a predetermined SOC range.

According to the used battery unit storage system of the present invention, since the used battery unit is stored in the storage device in such a state that the used battery unit is held in the holder, it is easy to handle the used battery unit compared with a case where various used battery units different in shape and size are stored and transported as they are.

Further, since the holder is detachably attached to the storage device, used battery units from various manufacturers can be transported and stored easily.

Then, since each of the used battery units stored in the storage device is connected to the battery status recognition unit through the connection unit provided in the holder, and the charge/discharge management unit discharges from the discharge-target battery unit and charges the charge-target battery unit according to the charge/discharge instruction information acquired by the charge/discharge instruction acquisition unit based on the status recognition of the battery status recognition unit so that the SOCs of the discharge-target battery unit and the charge-target battery unit fall with the predetermined SOC range, the deterioration of the used battery units during storage can be suppressed reliably.

Thus, the deterioration of used battery units from various manufacturers during storage can be suppressed.

Thus, according to the used battery unit storage system of the present invention, used battery units from various manufacturers can be easily transported through respective holders and stored in the storage device, and deterioration thereof can be suppressed by connecting the battery status recognition unit, the charge/discharge instruction acquisition unit, and the charge/discharge management unit to the connection unit provided in the holder of each used battery unit.

### Brief Description of Drawings

FIG. 1 is a block diagram illustrating the overall picture of a used battery unit holder of the present invention.
FIG. 2 is a block diagram illustrating a use state of the used battery unit holder of the present invention.
FIG. 3 is a flowchart illustrating a processing content of the used battery unit holder of the present invention.
FIG. 4 is a flowchart illustrating the processing content of the used battery unit holder of the present invention.
FIG. 5 is a flowchart illustrating the processing content of the used battery unit holder of the present invention.
FIG. 6 is a flowchart illustrating the processing content of the used battery unit holder of the present invention.
FIG. 7 is a flowchart illustrating the processing content of the used battery unit holder of the present invention.
FIG. 8 is a flowchart illustrating a modification of the processing content of the used battery unit holder of the present invention.
FIG. 9 is a flowchart illustrating another modification of the processing content of the used battery unit holder of the present invention.
FIG. 10 is a flowchart illustrating the modification of the processing content of the used battery unit holder of the present invention.
FIG. 11 is a block diagram illustrating a modification of the used battery unit holder of the present invention.
FIG. 12 is a block diagram illustrating an example of a used battery unit storage system of the present invention.

### Description of Embodiments

### <Configuration of Used Battery Unit Holder>

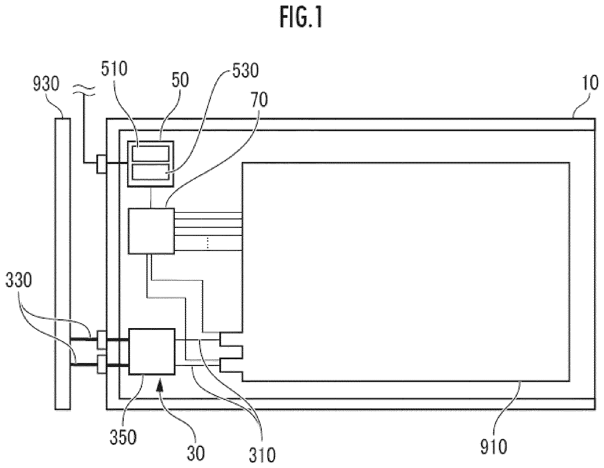

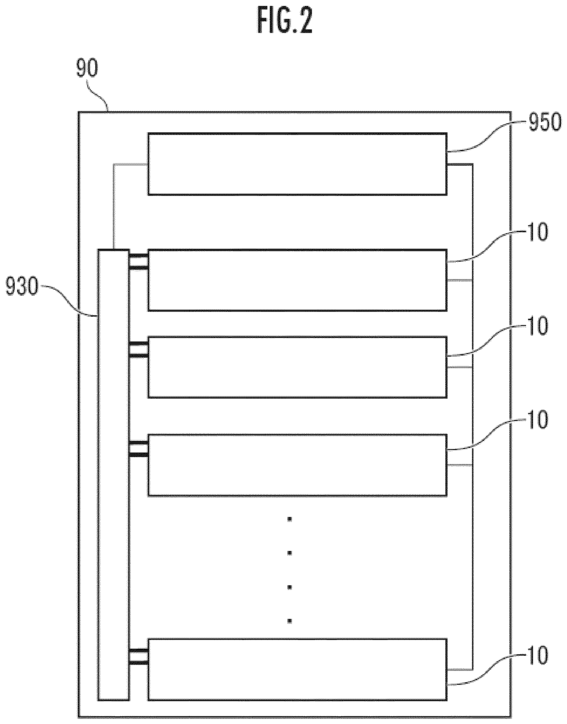

Referring first to FIG. 1 and FIG. 2, the configuration of a used battery unit holder of an embodiment will be described. Note that the same component may be given the same reference numeral to omit the description thereof.

For example, the used battery unit holder of the present embodiment is a used battery unit holder configured to include a holder body 10, a connection unit 30, a holder control unit 50, and a battery status recognition unit 70, which is detachably attachable to a storage device 90 for storing multiple used battery units 910.

The holder body 10 is a body part of the holder for holding each of the used battery units 910, which is configured to be detachably attachable to the storage device 90 for storing the multiple used battery units 910.

For example, the holder body 10 consists of flat plate-shaped members, that is, a bottom plate on which a used battery unit 910 is placed, and side plates which surround the used battery unit from the left and right sides and the back side.

Alternatively, the holder body 10 may further have a top plate which surrounds the used battery unit 910 from the top or a front plate which surrounds the used battery unit 910 from the front side. In this case, for example, any of the side plates, the top plate, and the front plate is configured to be openable and closable so that the used battery unit 910 can be held or taken out by opening and closing the part configured to be openable and closable. Further, the holder body 10 may have a fixture such as a band to suppress moving of the used battery unit on the holder during transportation.

The connection unit 30 is connected to the used battery unit 910 held in the holder to connect the used battery unit held in the holder through a connection circuit 930 included in the storage device 90 in such a manner that the used battery unit can be charged and discharged.

For example, the connection unit 30 is configured to include a battery-side connector 310 connected to respective terminals of the positive electrode and the negative electrode of the used battery unit 910, a connection circuit-side connector 330 connected to the connection circuit 930 of the storage device 90, and a connector circuit 350 to connect between the battery-side connector 310 and the connection circuit-side connector 330.

The holder control unit 50 is configured of an arithmetic processing unit such as a CPU (Central Processing Unit), a memory, I/O (Input/Output) devices, and the like. The holder control unit 50 reads and executes a predetermined program to function, for example, as a charge/discharge instruction acquisition unit 510 and a charge/discharge management unit 530.

The charge/discharge instruction acquisition unit 510 acquires charge/discharge instruction information to give a discharge instruction to a discharge-target battery unit DBU (not illustrated; the same applies below) to be discharged, and give a charge instruction to a charge-target battery unit CBU ((not illustrated; the same applies below) to be charged among the multiple used battery units 910 based on the battery status recognized by the battery status recognition unit 70.

According to the charge/discharge instruction information acquired by the charge/discharge instruction acquisition unit 510, the charge/discharge management unit 530 discharges from the discharge-target battery unit DBU and charges the charge-target battery unit CBU in such a manner that the SOCs (States Of Charge) of the discharge-target battery unit DBU and the charge-target battery unit CBU fall within a predetermined SOC range.

The battery status recognition unit 70 is connected to the positive electrode and the negative electrode of the used battery unit 910 held in the holder to recognize the battery status including the current value and the voltage value of the used battery unit 910, or further including the temperature thereof.

In other words, for example, the battery status recognition unit 70 is configured to include a current sensor that recognizes the current value of the used battery unit 910, a voltage sensor that recognizes the voltage value, and a temperature sensor that recognizes the temperature.

The storage device 90 is a device for storing the multiple used battery units 910, to which multiple holders of the present invention is detachably attachable.

The storage device 90 is configured to include the connection circuit 930 to which each used battery unit 910 held in each holder is connected in such a manner that the used battery unit 910 can be charged and discharged, and a storage device control unit 950 which transmits, to the charge/discharge instruction acquisition unit 510, the charge/discharge instruction information to give the discharge instruction to the discharge-target battery unit DBU to be discharged and give the charge instruction to the charge-target battery unit CBU to be charged among the multiple used battery units 910 based on the battery status recognized by the battery status recognition unit 70.

For example, the used battery unit 910 is a lithium-ion battery, but it may be any other battery that can be used repeatedly as a power supply by repeating charging and discharging such as a nickel-cadmium battery, a lead battery, or a fuel battery.

### <Outline of Processing>

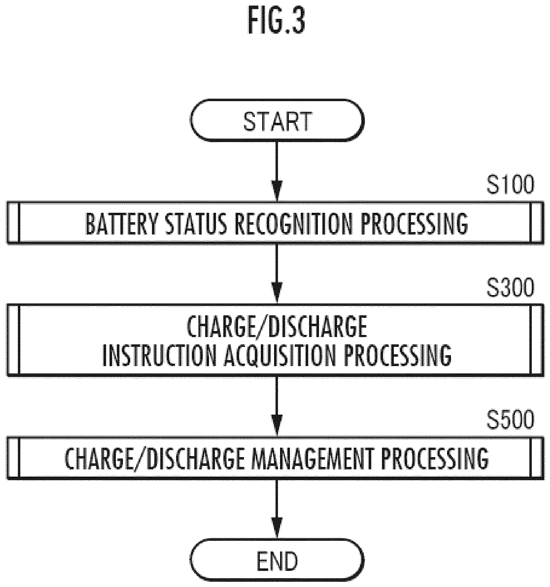

Next, a processing content of the used battery unit holder of the present embodiment will be described. Referring first to FIG. 3 to FIG. 7, a series of processing by the used battery unit holder will be described. The used battery unit holder of the present embodiment repeatedly executes the following series of processing periodically or not periodically.

### <Battery Status Recognition Processing>

When the series of processing is started, the battery status recognition unit 70 of the used battery unit holder executes battery status recognition processing to recognize the battery status including the current value and the voltage value of the used battery unit 910 held in the holder, and the temperature of the used battery unit 910 if necessary (FIG. 3/S100).

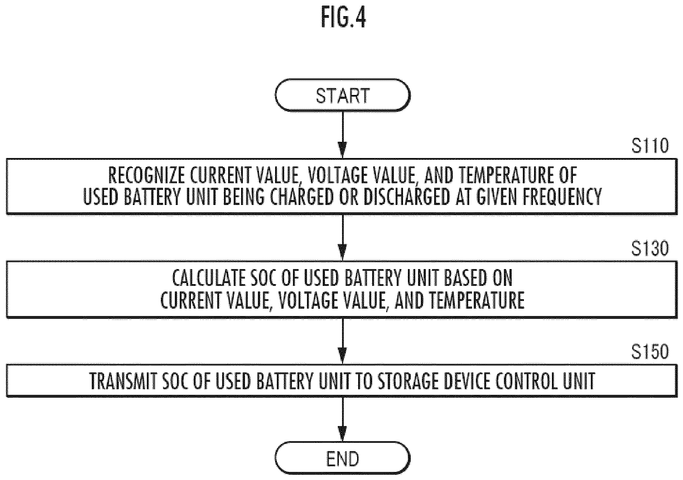

In other words, for example, the battery status recognition unit 70 causes the used battery unit 910 to be charged or discharged to recognize the current value, the voltage value, and the temperature of the used battery unit 910 upon charging or discharging at a given frequency (for example, every second) multiple times (FIG. 4/S110), calculates the SOC of the used battery unit 910 based on the recognized current value, voltage value, and temperature (FIG. 4/S130), transmits the calculated SOC to the storage device control unit 950 (FIG. 4/S150), and ends the processing.

### <Charge/Discharge Instruction Acquisition Processing>

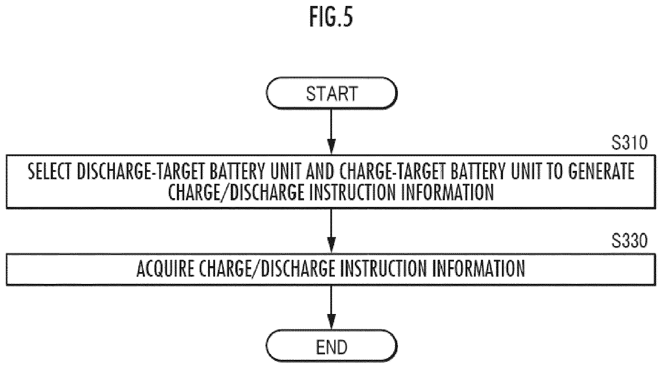

After that, the discharge-target battery unit DBU to be discharged and the charge-target battery unit CBU to be charged are selected to generate the charge/discharge instruction information (FIG. 5/S310) in order to acquire the charge/discharge instruction information (FIG. 5/S330). Thus, charge/discharge instruction acquisition processing is executed (FIG. 3/S300).

In other words, for example, the storage device control unit 950 selects the discharge-target battery unit DBU to be discharged and the charge-target battery unit CBU to be charged from among the multiple used battery units 910 based on the information received from the battery status recognition unit 70, generates and transmits the charge/discharge instruction information to give an instruction to the charge/discharge instruction acquisition unit 510 of a holder in which the discharge-target battery unit DBU is stored to discharge from the discharge-target battery unit DBU until it becomes a predetermined SOC, and generates and transmits the charge/discharge instruction information to give an instruction to the charge/discharge instruction acquisition unit 510 of a holder in which the charge-target battery unit CBU is stored to charge the charge-target battery unit CBU until it becomes a predetermined SOC (FIG. 5/S310).

Note that the predetermined SOC is an SOC value in a range capable of suppressing the deterioration of each used battery unit 910 according to the characteristics of the used battery unit 910, respectively. For example, the predetermined SOC value to be transmitted to the charge/discharge instruction acquisition unit 510 of the holder in which the discharge-target battery unit DBU is stored is the lower limit of the SOC range, and the predetermined SOC value to be transmitted to the charge/discharge instruction acquisition unit 510 of the holder in which the charge-target battery unit CBU is stored is the upper limit of the SOC range.

For example, when starting the storage of each used battery unit 910, information related to the SOC range capable of suppressing the deterioration of the used battery unit 910 may be stored in the storage device 90 by an operator of the storage device 90 entering the information through an input unit provided in the storage device 90, or, for example, based on information such as the manufacturer, model number, charge capacity, manufacturing date, usage history, and deteriorated state of the used battery unit 910 recognized by the battery status recognition unit 70, the storage device control unit 950 or the charge/discharge management unit 530 may determine the SOC range of the used battery unit 910 to store the SOC range of the used battery unit 910 in the storage device 90.

At this time, any of various methods may be adopted as the method by which the storage device control unit 950 selects the discharge-target battery unit DBU and the charge-target battery unit CBU.

In other words, for example, the storage device control unit 950 identifies, from among the multiple used battery units 910, a used battery unit 910 that exceeds the SOC lower limit in a range in which the current SOC value can suppress the deterioration of the used battery unit 910.

Then, the storage device control unit 950 selects, as the discharge-target battery unit DBU, a used battery unit 910 which is the largest in terms of a value obtained by subtracting, from a value of the current charge amount of each identified used battery unit 910, a charge amount value corresponding to the SOC lower limit in the range capable of suppressing the deterioration of the used battery unit 910. At this time, from among the used battery units 910, the storage device control unit 950 preferentially selects, as the discharge-target battery unit DBU, a used battery unit 910 that exceeds the SOC upper limit in a range in which the current SOC value can suppress the deterioration of the used battery unit 910.

Further, for example, the storage device control unit 950 selects, as the charge-target battery unit CBU, a used battery unit 910 which is the smallest in terms of the current SOC value. At this time, from among the used battery units 910, the storage device control unit 950 preferentially selects, as the charge-target battery unit CBU, a used battery unit 910 that falls below the SOC lower limit in a range in which the current SOC value can suppress the deterioration of the used battery unit 910.

After that, the charge/discharge instruction acquisition unit 510 of each used battery unit holder acquires charge/discharge instruction information (FIG. 5/S330) based on the battery status recognized by the battery status recognition unit 70 to discharge from the discharge-target battery unit DBU to be discharged and to charge the charge-target battery unit CBU to be charged among the multiple used battery units 910.

In other words, for example, the charge/discharge instruction acquisition unit 510 of a holder in which the discharge-target battery unit DBU is stored acquires charge/discharge instruction information by receiving the charge/discharge instruction information to give the discharge instruction until it becomes a predetermined SOC, and the charge/discharge instruction acquisition unit 510 of a holder in which the charge-target battery unit CBU is stored acquires charge/discharge instruction information by receiving the charge/discharge instruction information to give the charge instruction until it becomes a predetermined SOC.

### <Charge/Discharge Management Processing>

Then, according to the charge/discharge instruction information acquired by the charge/discharge instruction acquisition unit 510, the charge/discharge management unit 530 of each used battery unit holder executes charge/discharge management processing to discharge from the discharge-target battery unit DBU and charge the charge-target battery unit CBU in such a manner that the SOC of the discharge-target battery unit DBU and the charge-target battery unit CBU fall within the predetermined SOC range (FIG. 3/S500).

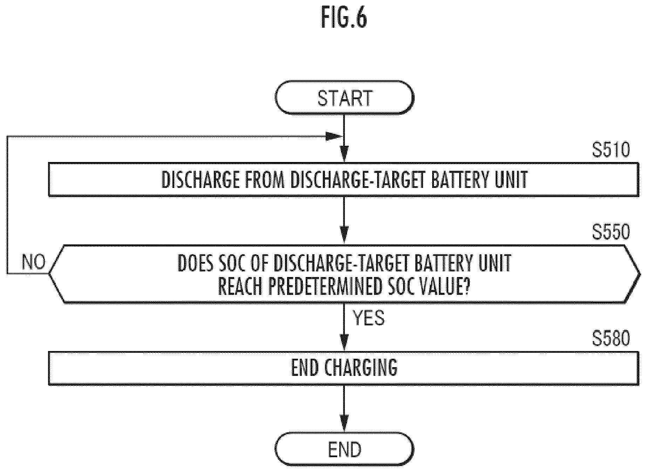

In other words, for example, the charge/discharge management unit 530 of a holder in which the discharge-target battery unit DBU is stored starts discharging from the discharge-target battery unit DBU (FIG. 6/S510). Note that the discharged power is supplied, for example, through an inverter or the like equipped in the storage device 90 to an external load in or around the facility where the storage device 90 is installed. Alternatively, the power may be charged to a battery separately equipped in the storage device 90.

After that, when the SOC of the discharge-target battery unit DBU reaches or gets closer, to a certain degree, to a predetermined SOC value contained in the charge/discharge instruction information (FIG. 6/S550: Yes), the charge/discharge management unit 530 of the holder in which the discharge-target battery unit DBU is stored stops the discharge from the discharge-target battery unit DBU (FIG. 6/S580).

On the other hand, when the SOC of the discharge-target battery unit DBU does not reach or does not get closer, to the certain degree, to the predetermined SOC value (FIG. 6/S550: No), the charge/discharge management unit 530 of the holder in which the discharge-target battery unit DBU is stored continues the discharge from the discharge-target battery unit DBU. A series of these processes is repeatedly executed until the SOC of the discharge-target battery unit DBU reaches or gets closer, to the certain degree, to the predetermined SOC value.

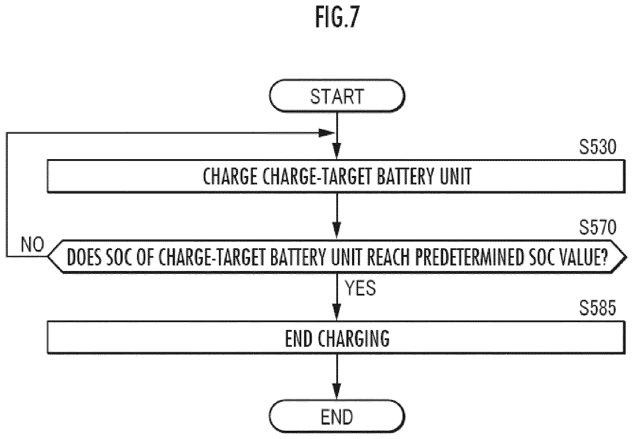

In parallel with this, the charge/discharge management unit 530 of a holder in which the charge-target battery unit CBU is stored starts charging to the charge-target battery unit CBU (FIG. 7/S530). Note that the charged power is supplied, for example, from a charger separately equipped in the storage device 90, or from an external power supply such as a solar power generator or a commercial power supply.

After that, when the SOC of the charge-target battery unit CBU reaches or gets closer, to a certain degree, to a predetermined SOC value contained in the charge/discharge instruction information (FIG. 7/S570: Yes), the charge/discharge management unit 530 of the holder in which the charge-target battery unit CBU is stored stops charging to the charge-target battery unit CBU (FIG. 7/S585).

On the other hand, when the SOC of the charge-target battery unit CBU does not reach or does not get closer, to the certain degree, to the predetermined SOC value (FIG. 7/S570: No), the charge/discharge management unit 530 of the holder in which the charge-target battery unit CBU is stored continues the charge to the charge-target battery unit CBU. A series of these processes is repeatedly executed until the SOC of the charge-target battery unit CBU reaches or gets closer, to the certain degree, to the predetermined SOC value.

At this time, the charge/discharge management unit 530 recognizes the current value, voltage value, and temperature of the used battery unit 910 during charging/discharging repeatedly at a predetermined frequency, calculates the SOC of the used battery unit 910 based on the recognized current value, voltage value, and temperature, and determines whether or not the SOC of the used battery unit 910 reaches or gets closer, to the certain degree, to the predetermined SOC value contained in the charge/discharge instruction information.

The series of these processes by the charge/discharge management unit 530 of the holder in which the discharge-target battery unit DBU or the charge-target battery unit CBU is stored is executed, and the charge/discharge management processing is ended. Note that the above processing by the charge/discharge management unit 530 of the holder in which the discharge-target battery unit DBU is stored, and the above processing by the charge/discharge management unit 530 of the holder in which the charge-target battery unit CBU is stored may be performed in parallel at the same time, or may be performed asynchronously.

As described above, according to the used battery unit holder of the present invention, used battery units from various manufacturers can be easily stored and transported while suppressing the deterioration of the used battery units during storage.

### <Other embodiments>

While the embodiment of the present invention has been described above, the present invention is not limited thereto. Various changes are possible without departing from the scope of the present invention. Modifications of the series of processing by the used battery unit holder will be described below as other embodiments.

In the present embodiment, the connection unit 30 is configured to connect the used battery unit 910 held in the holder to be able to be mutually charged/discharged through the connection circuit 930 included in the storage device 90.

Further, the charge/discharge instruction acquisition unit 510 is configured to acquire the charge/discharge instruction information to give charge/discharge instructions between the discharge-target battery unit DBU and the charge-target battery unit CBU based on the battery status recognized by the battery status recognition unit 70, and the charge/discharge management unit 530 is configured to discharge from the discharge-target battery unit DBU and charge the discharged power to the charge-target battery unit CBU according to the charge/discharge instruction information acquired by the charge/discharge instruction acquisition unit 510 in such a manner that the SOCs of the discharge-target battery unit DBU and the charge-target battery unit CBU fall within the predetermined SOC range.

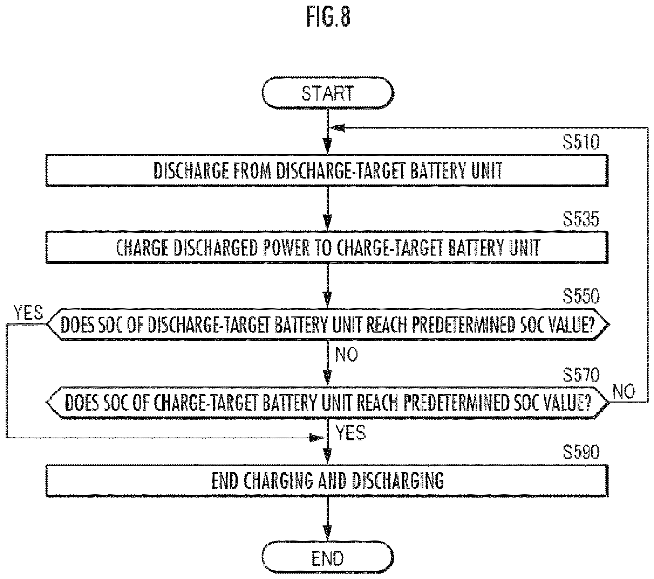

FIG. 8 is a flowchart illustrating a flow of charge/discharge management processing when configured in this way. In other words, the charge/discharge management unit 530 of the holder in which the discharge-target battery unit DBU is stored starts discharging from the discharge-target battery unit DBU (FIG. 8/S510). Then, the charge/discharge management unit 530 of the holder in which the charge-target battery unit CBU is stored starts charging the discharged power to the charge-target battery unit CBU (FIG. 8/S535).

After that, when the SOC of the discharge-target battery unit DBU reaches or gets closer, to the certain degree, to the predetermined SOC value contained in the charge/discharge instruction information (FIG. 8/S550: Yes), or when the SOC of the charge-target battery unit CBU reaches or gets closer, to the certain degree, to the predetermined SOC value contained in the charge/discharge instruction information (FIG. 8/S570: Yes), the charge/discharge management units 530 of both holders in which charging and discharging are being done stop charging and discharging (FIG. 8/S590).

On the other hand, when the SOC of the discharge-target battery unit DBU does not reach or does not get closer, to the certain degree, to the predetermined SOC value (FIG. 8/S550: No), and when the SOC of the charge-target battery unit CBU does not reach or does not get closer, to the certain degree, to the predetermined SOC value (FIG. 8/S570: No), the charge/discharge management units 530 of the both holders continue the discharge from the discharge-target battery unit DBU and the charge of the discharged power to the charge-target battery unit CBU. A series of these processes is executed, and the charge/discharge management processing is ended.

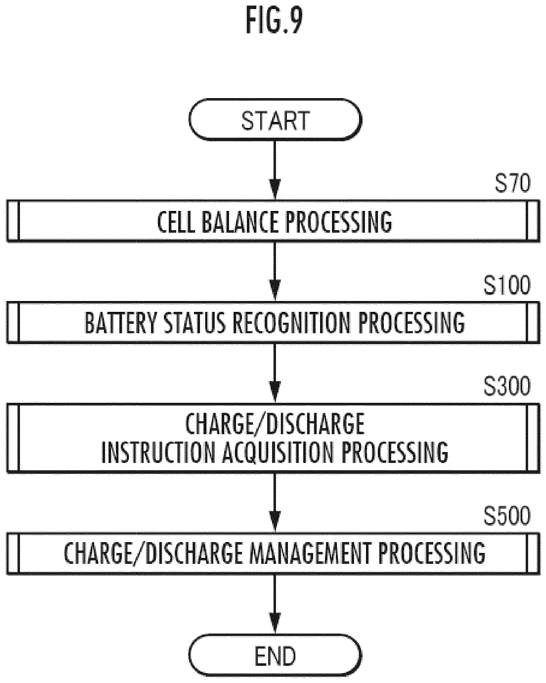

Alternatively, in another embodiment, the used battery unit holder of the present invention executes processing below, for example, prior to the execution of the above series of processing, to eliminate the variations of voltage values among plural cells that construct each used battery unit 910 (FIG. 9/S70). Note that any of various methods can be adopted as the method of eliminating the variations of voltage values among the cells, but in this embodiment, the variations of voltage values among the cells are eliminated by a flow of processing below. For example, this processing is executed when the used battery unit holder in which each used battery unit 910 is connected is attached to the storage device 90. Note that a flow of processing for one used battery unit holder will be described below for the shake of simplifying the description.

### <Cell Balance Processing>

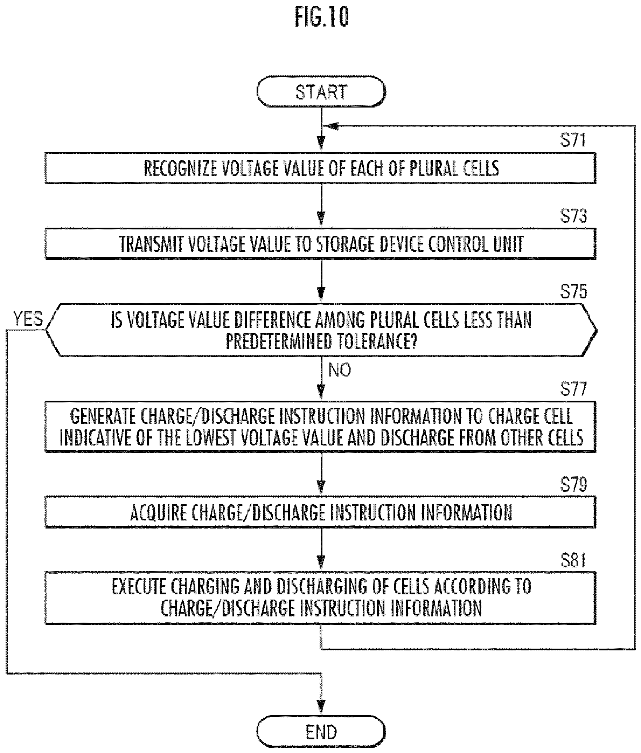

When the processing is started, for example, the battery status recognition unit 70 recognizes the voltage value of each of plural cells as the battery status of each of the plural cells that construct a used battery unit 910 held in a holder (FIG. 10/S71).

In other words, the battery status recognition unit 70 in this embodiment is connected to the positive electrode and the negative electrode of each of the plural cells that construct the used battery unit 910 to recognize the voltage value of each of the plural cells, respectively.

Then, the battery status recognition unit 70 transmits, to the storage device control unit 950, the recognized voltage value of each of the plural cells (FIG. 10/S73).

When a voltage value difference among the plural cells is a predetermined tolerance or more (FIG. 10/S75: No), the storage device control unit 950 generates and transmits charge/discharge instruction information to charge a cell indicating the lowest voltage value among those of the plural cells, and to discharge from the other cells (FIG. 10/S77).

Then, the charge/discharge instruction acquisition unit 510 receives and acquires charge/discharge instruction information based on the battery status of each of the plural cells thus generated (FIG. 10/S79), and the charge/discharge management unit 530 performs charging and discharging according to the acquired charge/discharge instruction information to charge the cell indicating the lowest voltage value among the plural cells, and to discharge from the other cells (FIG. 10/S81).

Then, the used battery unit holder of this embodiment repeats the processes of S71 to S81 until the voltage value difference among the plural cells becomes less than the predetermined tolerance (FIG. 10/S75: Yes).

Thus, the charge/discharge management unit 530 charges or discharges each of the plural cells that construct the used battery unit 910 held in the holder until the voltage value difference among the plural cells becomes less than the predetermined tolerance.

Thus, a difference between the highest voltage value and the lowest voltage value among voltage values indicated by the plural cells becomes less than the predetermined tolerance to make the voltage values of the cells that construct the used battery unit 910 uniform.

In the above, for example, such a configuration that the charge/discharge instruction acquisition unit 510, the charge/discharge management unit 530, and the battery status recognition unit 70 are equipped in each holder is described, but the present invention is not limited thereto.

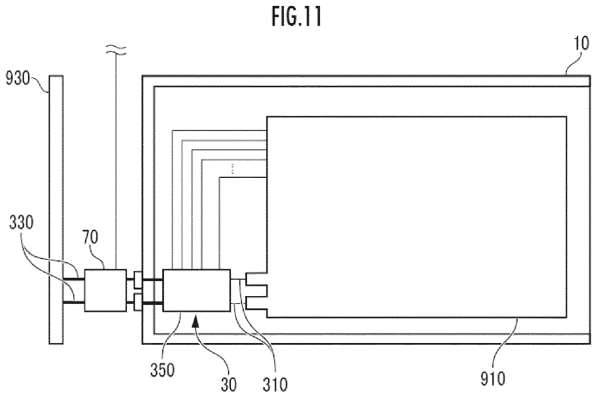

In other words, for example, as illustrated in FIG. 11, the connection unit 30 freely connectable to the used battery unit 910 held in the holder is provided in the holder in a used battery unit storage system of the present invention.

Further, the connection unit 30 is connected as needed to the positive electrode and the negative electrode of each of the plural cells that construct the used battery unit 910.

In this case, for example, the battery status recognition unit 70 is provided in the storage device 90 and connected to the used battery unit 910 held in the holder through the connection unit 30 to recognize the battery status including the current value and the voltage value of the used battery unit 910. Note that the battery status recognition unit 70 may also be provided in each holder (that is, for each used battery unit 910), or one battery status recognition unit 70 may be configured to recognize the battery status of the multiple used battery units 910.

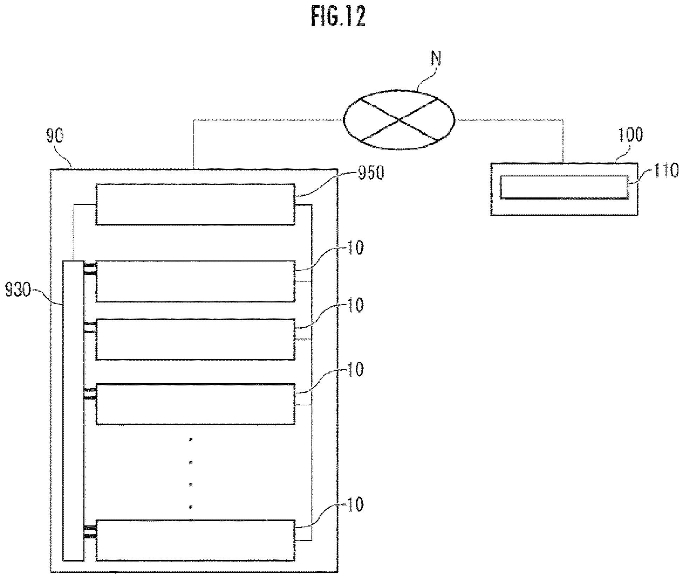

Alternatively, as illustrated in FIG. 12, a server 100 connected to the storage device 90 through an information communication network N in a manner to be communicable with each other may further be provided.

Note that the server 100 is, for example, a computer. Then, a server control unit 110 is configured of an arithmetic processing unit such as a CPU, a memory, I/O devices, and the like to perform processing to be described later by reading a predetermined program and executing the program.

In this case, for example, the battery status recognition unit 70 transmits, to the server control unit 110, the recognized battery status of the used battery unit 910. Then, the server control unit 110 that received the battery status selects the discharge-target battery unit DBU and the charge-target battery unit CBU, generates charge/discharge instruction information, and transmits the generated charge/discharge instruction information to the storage device control unit 950.

Then, the storage device control unit 950 functions as the charge/discharge instruction acquisition unit 510 to receive the charge/discharge instruction information generated by the server control unit 110, and functions as the charge/discharge management unit 530 to discharge from the discharge-target battery unit DBU and charge the charge-target battery unit CBU in such a manner that the SOCs of the discharge-target battery unit DBU and the charge-target battery unit CBU fall within the predetermined SOC range according to the received charge/discharge instruction information.

While the embodiments of the present invention have been described above, the present invention is not limited thereto. Further, various changes are possible without departing from the scope of the present invention.

For example, the embodiment in which the charge/discharge instruction information is generated by the storage device control unit 950 is described above, but the present invention is not limited thereto.

In other words, for example, the battery status recognition units 70 may transmit and receive battery status to and from one another to share information on the battery status, and generate charge/discharge instruction information according to a predetermined algorithm as mentioned in the description of the above charge/discharge instruction acquisition processing to cause the respective charge/discharge instruction acquisition units 510 to acquire the generated charge/discharge instruction information.

Similarly, the battery status recognition units 70 may transmit and receive the battery status of the respective plural cells that construct the respective used battery units 910 to and from one another to share the battery status, and generate charge/discharge instruction information based on the battery status of the respective plural cells according to a predetermined algorithm as mentioned in the description of the above cell balance processing to cause the respective charge/discharge instruction acquisition units 510 to acquire the generated charge/discharge instruction information.

In this case, the storage device control unit 950 is omitted, and multiple battery status recognition units 70 generate charge/discharge instruction information in collaboration with one another, or any one of the battery status recognition units 70 representatively generates the charge/discharge instruction information.

Alternatively, for example, the charge/discharge instruction acquisition unit 510 may accept input of charge/discharge instruction information by the operator of the storage device 90 to acquire the charge/discharge instruction information. In this case, for example, the holder body 10 or the storage device 90 includes a display unit for displaying the battery status of each used battery unit 910, and an input unit for accepting the input of the charge/discharge instruction information based on the battery status.

Alternatively, for example, the battery status recognition unit 70 may also be configured to determine whether or not the used battery unit 910 is in a normal state based on the recognized battery status and charge/discharge instruction information, and when an abnormality is detected, output information to inform that.

In other words, for example, when the temperature of the used battery unit 910 held in the holder becomes a predetermined value or higher, when the SOC of the used battery unit 910 being discharged according to the charge/discharge instruction information does not decrease or decreases rapidly, when the SOC of the used battery unit 910 being charged does not increase or increases rapidly, or when the voltage value difference among the plural cells does not become less than the predetermined tolerance after cell charging or discharging is repeated, the battery status recognition unit 70 determines that the state of the used battery unit 910 is abnormal, and outputs information to inform that through an output unit provided in the holder body 10 or the storage device 90.

Note that any of various output devices such as a display, a speaker, and a printer may be used as the output unit.

Further, for example, such a configuration as to charge a used battery unit 910 that exceeds the SOC lower limit in a range in which the current SOC value can suppress the deterioration of the used battery unit 910 is described above, but the present invention is not limited thereto.

In other words, for example, even when the SOCs of all the used battery units 910 stored in the storage device 90 are within a range that can suppress deterioration, any of the used battery units 910 may be selected as the discharge-target battery unit DBU and the charge-target battery unit CBU from among the used battery units 910 to generate charge/discharge instruction information so that the charge/discharge management unit 530 discharges from the discharge-target battery unit DBU and charges the discharged power to the charge-target battery unit CBU.

Thus, when an abnormality occurs in a used battery unit 910, since the used battery units 910 stored in the storage device 90 are charged or discharged thoroughly at an arbitrary timing, it is convenient because the possibility of being able to find the abnormality increases.

Further, for example, the timing of the execution of the cell balance processing is not limited to the time when a used battery unit holder with a used battery unit 910 connected thereto is attached to the storage device 90, and the cell balance processing may also be executed irregularly or regularly at any timing.

Further, for example, any shape and structure may be adopted as the shape and structure of the holder body 10 as long as they do not interfere with the effects of the present invention.

### Description of Reference Numerals

10... holder body, 30... connection unit, 70...battery status recognition unit, 90... storage device, 510... charge/discharge instruction acquisition unit, 530...charge/discharge management unit, 910...used battery unit, 930...connection circuit.

## Claims

1. A used battery unit holder detachably attachable to a storage device which stores a plurality of used battery units, comprising:
a holder body which holds each of the used battery units;
a connection unit connected to the used battery unit held in the holder to connect the used battery unit held in the holder through a connection circuit included in the storage device in such a manner that the used battery unit can be charged and discharged;
a battery status recognition unit connected to the used battery unit held in the holder to recognize battery status including a current value and a voltage value of the used battery unit;
a charge/discharge instruction acquisition unit which acquires charge/discharge instruction information based on the battery status recognized by the battery status recognition unit to give a discharge instruction to a discharge-target battery unit to be discharged and give a charge instruction to a charge-target battery unit to be charged among the used battery units; and
a charge/discharge management unit which discharges from the discharge-target battery unit and charges the charge-target battery unit according to the charge/discharge instruction information acquired by the charge/discharge instruction acquisition unit so that SOCs (States Of Charge) of the discharge-target battery unit and the charge-target battery unit fall within a predetermined SOC range.

2. The used battery unit holder according to claim 1, wherein
the connection unit is configured to connect the used battery unit held in the holder to be able to be mutually charged/discharged through the connection circuit included in the storage device,
the charge/discharge instruction acquisition unit is configured to acquire charge/discharge instruction information to give charge/discharge instructions between the discharge-target battery unit and the charge-target battery unit based on the battery status recognized by the battery status recognition unit, and
the charge/discharge management unit is configured to discharge from the discharge-target battery unit and charge discharged power to the charge-target battery unit according to the charge/discharge instruction information acquired by the charge/discharge instruction acquisition unit in such a manner that the SOCs of the discharge-target battery unit and the charge-target battery unit fall within the predetermined SOC range.

3. The used battery unit holder according to claim 1 or 2, wherein
the battery status recognition unit is configured to recognize temperature of the used battery unit held in the holder as the battery status, and
the charge/discharge instruction acquisition unit is configured to acquire the charge/discharge instruction information based on the battery status including the temperature of the used battery unit.

4. The used battery unit holder according to any one of claims 1 to 3, wherein
the battery status recognition unit is configured to recognize the battery status of each of a plurality of cells that constitute the used battery unit,
the charge/discharge instruction acquisition unit is configured to acquire the charge/discharge instruction information based on the battery status of each of the plurality of cells, and
the charge/discharge management unit is configured to charge or discharge each of the plurality of cells that constitute the used battery unit held in the holder according to the charge/discharge instruction information acquired by the charge/discharge instruction acquisition unit until a voltage value difference among the plurality of cells becomes less than a predetermined tolerance.

5. A used battery unit storage system comprising:
a holder which detachably holds a used battery unit;
a storage device of used battery units, to which a plurality of the holders in which the used battery units are held, respectively, can be detachably attached;
a connection unit provided in the holder to be connectable to the used battery unit held in the holder;
a battery status recognition unit connected to the used battery unit held in the holder through the connection unit to recognize battery status including a current value and a voltage value of the used battery unit;
a charge/discharge instruction acquisition unit which acquires charge/discharge instruction information to give a discharge instruction to a discharge-target battery unit to be discharged and a charge instruction to a charge-target battery unit to be charged among a plurality of the used battery units based on the battery status recognized by the battery status recognition unit; and
a charge/discharge management unit which discharges from the discharge-target battery unit and charges the charge-target battery unit according to the charge/discharge instruction information acquired by the charge/discharge instruction acquisition unit so that SOCs (States Of Charge) of the discharge-target battery unit and the charge-target battery unit fall within a predetermined SOC range.
